# EUROPÄISCHE PATENTSCHRIFT

(11) **EP 0 807 823 B1**
(45) Veröffentlichungstag und Bekanntmachung des Hinweises auf die Patenterteilung: **28.08.2002**
(21) Anmeldenummer: 97106608.9
(22) Anmeldetag: 22.04.1997
(51) Int. Cl.: G01P 1/08

(54) **Kraftfahrzeug mit einer Anzeigevorrichtung**
Motor vehicle with display device
Automobile avec dispositif d'affichage

(30) Priorität: 02.05.1996 DE 29607905 U
(43) Veröffentlichungstag der Anmeldung: 19.11.1997
(73) Patentinhaber: ADAM OPEL AG, 65423 Rüsselsheim (DE)
(72) Erfinder: Bleuel, Walter, Dipl.-Ing. (FH), 65719 Hofheim / Ts (DE)

(56) Entgegenhaltungen:
- DE-A- 2 834 359
- US-A- 3 653 257
- US-A- 4 704 984

## Beschreibung

Die Erfindung bezieht sich auf ein Kraftfahrzeug mit einer Anzeigevorrichtung mit den im Oberbegriff des Patentanspruchs 1 angegebenen Merkmalen.

Eine derartige Anzeigevorrichtung ist beispielsweise aus der DE 28 34 359 C2 bekannt. Zwei Zeiger sind um koaxial zueinander gelegenen Achsen verschwenkbar, wobei die Zeiger zur Anzeige von Geschwindigkeit und Motordrehzahl auf zugeordneten Anzeigeskalen dienen können. Die Zeiger werden jeweils von Zeigerantrieben bewegt, wenn sich die Fahrzeuggeschwindigkeit oder die Motordrehzahl verändert.

Kraftfahrzeuge, in denen solche Anzeigevorrichtungen zum Einsatz kommen, sind in der Regel mit Getrieben ausgestattet, die es zulassen, das Übersetzungsverhältnis zwischen einem Motorabtrieb und Fahrzeugantriebsrädern zu verändern (Schaltgetriebe). Somit kann je nach Übersetzungsverhältnis bei ein und derselben Motordrehzahl eine unterschiedliche Fahrzeuggeschwindigkeit realisiert werden.

Die gemeinsame Anordnung einer Geschwindigkeits- und einer Drehzahlanzeige ist vorteilhaft, da so Bauraum und Kosten zu sparen sind und ein Fahrer mit einem Blick beide Meßwerte erfassen kann, was bei zwei getrennten Instrumenten nicht möglich ist. Nach der DE 28 57 738 C2 ist vorgesehen, weitere Anzeigeelemente in einer Anzeigevorrichtung der genannten Art unterzubringen.

Zur Verringerung des Kraftstoffverbrauches wird empfohlen, mit möglichst geringer Motordrehzahl, also bei Einstellung des niedrigst möglichen Übersetzungsverhältnisses (höchster Gang) zu fahren, und es ist sinnvoll, dem Fahrer einen Hinweis zu geben, der aussagt, ob das Fahrzeug momentan in diesem verbrauchsgünstigen Bereich betrieben wird. Dazu wurden in der Vergangenheit aufwendige Ganganzeigen realisiert und es werden auch an Anzeigevorrichtungen Gangschaltempfehlungen signalisiert (beispielsweise DE 37 18 439 C2). Diese erfordern jedoch einen erheblichen elektronischen Aufwand und es sind ablenkende Ableseoperationen auszuführen. Ein Rückschluß darüber, ob verbrauchsoptimal gefahren wird, lassen diese Ganganzeigen nicht zu. Es ist Aufgabe der Erfindung, ein Kraftfahrzeug mit einer Anzeigevorrichtung der genannten Art zu schaffen, die es ohne zusätzlichen Aufwand ermöglicht, daß ein Fahrer des Kraftfahrzeugs erkennt, ob er verbrauchsoptimiert, also mit niedrigst möglichem Übersetzungsverhältnis fährt.

Zur Lösung dieser Aufgabe zeichnet sich das erfindungsgemäße Kraftfahrzeug durch die im Patentanspruch 1 angegebenen Merkmale aus. Einzelheiten der Erfindung ergeben sich aus den Patentansprüchen 2 bis 6.

Die um koaxiale Achsen verschwenkbaren Zeiger werden von den zugehörigen Zeigerantrieben derart angetrieben, daß ihre Schwenkbewegungen bei Einstellung des niedrigst möglichen Übersetzungsverhältnisses (im allgemeinen fünfter Gang) kongruent erfolgen, sich die Zeiger also übereinanderliegend bewegen. Bei Einstellung höherer Übersetzungsverhältnisse eilt der Zeiger zur Geschwindigkeitsanzeige dem Zeiger zur Drehzahlanzeige nach. Somit ist für einen Fahrzeugführer schnell und direkt ersichtlich, ob der höchste Gang eingelegt ist. Wenn ja, kann sowohl die Geschwindigkeit als auch die Drehzahl besonders schnell erfaßt werden, da die Zeiger dann immer deckungsgleich sind.

Die Anzeigeskalen der Zeiger sollten einen Nullpunkt haben, der etwa in gleicher Winkellage zur Achse der Zeiger liegt, wobei es jedoch von Vorteil ist, wenn sich die Drehzahl-Anzeigeskala von dort aus über einen größeren Winkelbereich erstreckt als die Geschwindigkeits-Anzeigeskala. Der über den Winkelbereich der Geschwindigkeits-Anzeigeskala reichende Winkelbereich der Drehzahl-Anzeigeskala kann zur Anzeige von kritischen hohen Motordrehzahlen genutzt werden, die nicht bei Einstellung des niedrigst möglichen Übersetzungsverhältnisses erreicht werden, und sollte gesondert, beispielsweise rot markiert sein.

Als vorteilhaft wird angesehen, wenn die Drehzahl-Anzeigeskala näher an der Zeigerachse liegt als die Geschwindigkeits-Anzeigeskala und damit der Drehzahlzeiger kürzer als der Geschwindigkeitszeiger ist. Damit wird der zur Verfügung stehende Skalenbereich für die Geschwindigkeit größer, so daß genaue Werte ablesbar sind.

Die Zeigerantriebe wandeln eingehende Meßsignale zur Geschwindigkeit bzw. Drehzahl und setzen diese Werte in Schwenkbewegungen der Zeiger um. Dabei wird zumindest ein Proportionalitätsfaktor genutzt. Sinnvoll ist aber die Nutzung mehrerer solcher Faktoren, so daß bestimmte besonders wichtige Geschwindigkeits- und Drehzahlbereiche breiter gefächert darstellbar sind als andere, weniger wichtigere Bereiche. Die Proportionalitätsfaktoren bestimmen das Verhältnis zwischen dem jeweiligen Meßsignal und dem daraus resultierenden Zeigerausschlag. Die Proportionalitätsfaktoren der beiden Zeigerantriebe sind derart aufeinander abgestimmt, daß im höchsten Gang (niedrigstes Übersetzungsverhältnis) eine deckungsgleiche Zeigerbewegung erfolgt. Die Anzeigeskalen sind dann so beschriften, daß bei jedem Geschwindigkeitswert (Geschwindigkeits-Anzeigeskala) die im höchsten Gang zugehörige Motordrehzahl (Drehzahl-Anzeigeskala) plaziert wird.

Details der Erfindung werden anhand eines Ausführungsbeispiels beschrieben. Von den zugehörigen Zeichnungen zeigt:
- Fig. 1:: eine Draufsicht auf eine Anzeigevorrichtung nach der Erfindung bei Darstellung mehrerer Positionen eines Geschwindigkeitszeigers;
- Fig. 2:: ein Diagramm zur Verdeutlichung der Arbeitsweise von Zeigerantrieben der Anzeigevorrichtung nach Fig. 1.

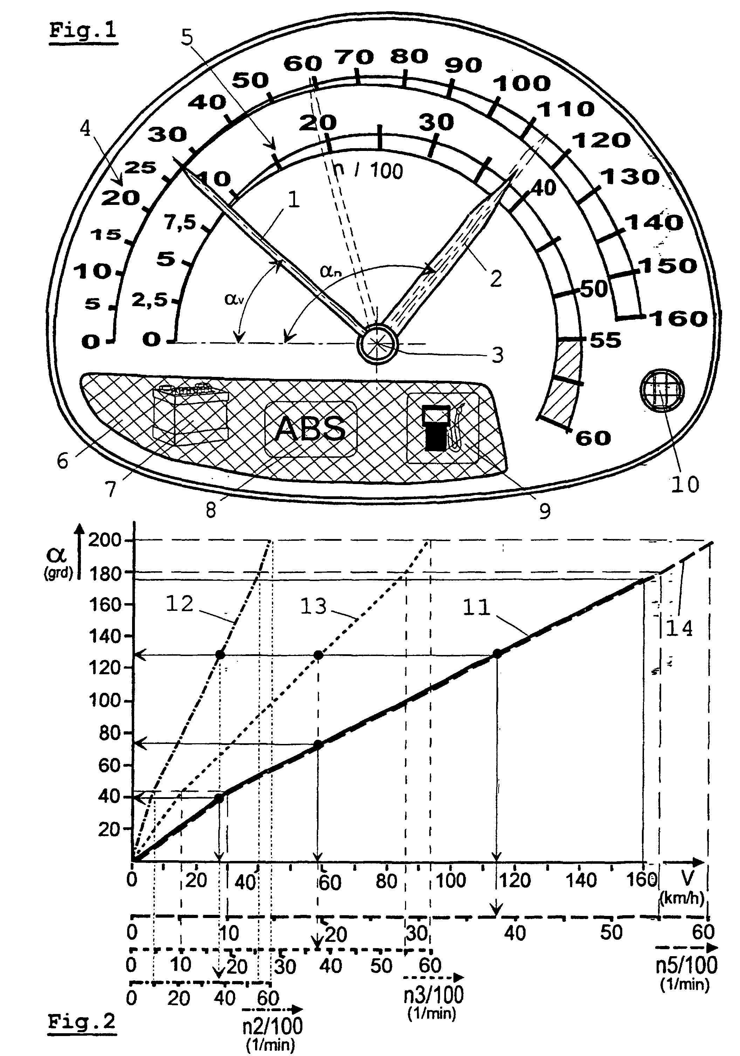

Wie aus Fig. 1 deutlich wird, besteht die Anzeigevorrichtung aus zwei Zeigern 1, 2, die um koaxiale Achsen 3 verschwenkbar gelagert sind. Den Zeigern 1, 2 sind Anzeigeskalen 4, 5 zugeordnet, wobei die Anzeigeskala 4 zum Ablesen von Fahrzeuggeschwindigkeiten V (in km/h) und die Anzeigeskala 5 zum Ablesen von Motordrehzahlen n (in 1/min) dient. Die Drehzahl n ist mit 100 zu multiplizieren, um den reellen Wert zu bestimmen, wie dies üblich ist.

Es sind gesonderte Anzeigen als Teil der Anzeigevorrichtung vorgesehen. Speziell wird im Beispiel durch ein Anzeigefeld 6 eine Ladekontrolle 7, eine ABS-Kontrolle 8 und eine Tankkontrolle 9 realisiert. Des weiteren ist eine Warnlampe 10 für eine weitere beliebige Warnfunktion vorgesehen. Es könnte auch ein Display oder andere Zusatzanzeigen in die Anzeigevorrichtung integriert werden.

Die Anzeigeskala 4 für die Geschwindigkeit V liegt weiter entfernt von der Achse 3 der Zeiger 1, 2 als die Anzeigeskala 5 der Drehzahl n, wobei beide Anzeigeskalen 4, 5 einen Nullpunkt haben, der in gleicher Winkellage zur Achse 3 liegt. Von dort erstrecken sich die Anzeigeskalen 4, 5 über einen verschieden großen Winkelbereich in Uhrzeigerrichtung. An jeder Anzeigeskala 4, 5 sind Zahlenwerte angegeben, die nicht gleichmäßig aufgetragen sind. Bis zum Wert von 30 km/h sind 15° Anzeigeskala 4 je 10 km/h vorgesehen. Bei höheren Geschwindigkeiten V (von 30 bis 160 km/h) sind dann nur noch 10° Anzeigeskala 4 je 10 km/h vorgesehen. Vergleichbar ist auch die Aufteilung der Anzeigeskala 5 für die Drehzahl n. Für den Bereich von 0 bis 1000 1/min stehen 45° Anzeigeskala zur Verfügung. Anschließend (von 1000 bis 5500 1/min) sind 30° Anzeigeskala 5 je 1000 1/min vorgesehen und für den höchsten Drehzahlbereich (5500 bis 6000 1/min) stehen 20° Anzeigeskala 5 zur Verfügung. Somit werden geringe Geschwindigkeiten V und Drehzahlen n sowie hohe Drehzahlen n genauer, da breiter gesplittet dargestellt, als der übrige Meßbereich. Für den Zeigerantrieb des Zeigers 1 müssen dementsprechend zwei Proportionalitätsfaktoren vorgesehen sein und der Zeigerantrieb des Zeigers 2 arbeitet auf der Basis dreier Proportionalitätsfaktoren.

In Fig. 1 sind drei Positionen des Zeigers 1 sowie eine Position des Zeigers 2 dargestellt. Die angezeigte Motordrehzahl n beträgt momentan 3750 1/min. Bei Einstellung des zweiten Ganges am Getriebe und nicht unterbrochener Kraftübertragung wird bei dieser Motordrehzahl n eine Geschwindigkeit V von etwa 27,5 km/h erreicht. Im dritten Gang würde die Geschwindigkeit V bei etwa 59 km/h liegen und im fünften Gang wäre die Geschwindigkeit V bei der genannten Motordrehzahl n etwa 114 km/h. Dies hängt natürlich in gewissem Maße von der aktuellen Fahrsituation ab und die Geschwindigkeitswerte können geringfügig schwanken. Für alle Gänge, aber insbesondere für den höchsten Gang sind Geschwindigkeiten V,die bestimmten Motordrehzahlen n zuzuordnen sind, experimentell zu ermitteln. Dabei sollten durchschnittliche Fahr- und Belastungssituationen simuliert werden.

Somit ist es dann möglich, die Proportionalitätsfaktoren der Zeigerantriebe derart festzulegen, daß bei niedrigst möglichem Übersetzungsverhältnis des Getriebes eine kongruente Zeigerbewegung erfolgt. Die Zeiger 1, 2 bewegen sich im Beispiel im fünften Gang deckungsgleich. In tieferen Gängen eilt der Geschwindigkeitszeiger 1 dem Drehzahlzeiger 2 immer nach.

Aus Fig. 2 wird die Arbeitsweise der Anzeigevorrichtung noch deutlicher, wobei das Diagramm die Abhängigkeit des Zeigerwinkels α (speziell αv des Geschwindigkeitszeigers 1 und αn des Drehzahlzeigers 2) von der momentanen Geschwindigkeit V sowie der Drehzahl n verdeutlicht.

Für die Geschwindigkeit V gilt die durchgezogene Linie 11 in Fig. 2. Knicke im Anstieg der Kurven existieren immer an Stellen, wo der Proportionalitätsfaktor der Zeigerantriebe wechselt. Die Linie 11 hat einen solchen Knick bei 30 km/h, da, wie weiter oben erläutert, bis zu diesem Wert der Geschwindigkeit V eine breitere Splittung vorgesehen ist als bei höheren Geschwindigkeiten V. Eine Linie 12 verdeutlicht die Bewegung des Drehzahlzeigers 2 im zweiten Gang, wobei die zugehörige Drehzahlachse n2 die unterste der drei Drehzahlachsen des Diagramms ist. Für den dritten Gang gilt die Linie 13 mit der zugehörigen Drehzahlachse n3 und für den fünften Gang ist die Linie 14 aufgetragen, wobei hier die Drehzahlachse n5 zur Anwendung kommt. Alle drei Drehzahllinien 12, 13, 14 haben Knicke bei 1000 1/min und bei 5500 1/min aus dem weiter oben erläuterten Grund.

Wie deutlich aus dem Diagramm hervorgeht, verlaufen die Linien 11 und 14 deckungsgleich zueinander. Im fünften Gang vollziehen die Zeiger 1, 2 also gleiche Schwenkbewegungen um die Achse 3. Die Winkel αv und αn sind immer gleich. Drehzahlen n oberhalb von etwa 5350 1/min haben hier (im fünften Gang) keine Bedeutung, obwohl sie in das Diagramm aufgenommen wurden. Im fünften Gang ist die Drehzahl n durch die Motorleistung begrenzt, da höhere Geschwindigkeiten V als 160 km/h nicht erreichbar sind.

Im Diagramm nach Fig. 2 sind jeweils Hilfslinien bei den Knickpunkten der Linien 11 bis 14 eingetragen. Weitere Hilfslinien sind aufgenommen für die in Fig. 1 gezeigten momentanen Geschwindigkeits- und Drehzahlbedingungen. Bei einer Motordrehzahl n von 3750 1/min beträgt der Zeigerausschlag αn des Drehzahlzeigers 2 unabhängig vom eingelegten Gang etwa 130°. Die zugehörige Geschwindigkeit V ist im zweiten Gang etwa 27,5 km/h (αv = 40°), im dritten Gang etwa 59 km/h (αv = 74°) und im fünften Gang etwa 114 km/h (αv = 130°).

Bei der Fahrt sind mit einem Blick sowohl die Geschwindigkeit V als auch die Drehzahl n ablesbar und zusätzlich ist direkt erkennbar, ob der höchste Gang eingelegt ist. Ist dies der Fall, sind die Zeiger 1, 2 deckungsgleich. Die Ganganzeige erfolgt also ohne zusätzlichen Aufwand.

## Patentansprüche

1. Kraftfahrzeug mit einer in einer Armaturentafel angeordneten Anzeigevorrichtung und einem Getriebe zur variablen Einstellung eines Übersetzungsverhältnisses zwischen einem Motorabtrieb und Fahrzeugantriebsrädern, wobei die Anzeigevorrichtung zwei Zeiger (1, 2) umfaßt, welche mittels zugeordneter Zeigerantriebe um koaxial zueinander gelegene Achsen (3) verschwenkbar sind und wobei ein Zeiger (1) zur Anzeige der aktuellen Fahrzeuggeschwindigkeit (V) und ein Zeiger (2) zur Anzeige einer aktuellen Motordrehzahl (n) dient, **dadurch gekennzeichnet, daß** die Zeigerantriebe derart ausgelegt sind, daß Schwenkbewegungen beider Zeiger (1, 2) bei Einstellung des niedrigst möglichen Übersetzungsverhältnisses am Getriebe und nicht unterbrochener Kraftübertragung vom Motor zu den Antriebsrädern kongruent erfolgen und der Zeiger (1) zur Geschwindigkeitsanzeige bei Einstellung höherer Übersetzungsverhältnisse am Getriebe dem Zeiger (2) zur Drehzahlanzeige nacheilt.

2. Kraftfahrzeug nach Anspruch 1, **dadurch gekennzeichnet, daß** der mögliche Schwenkbereich des Zeigers (2) zur Drehzahlanzeige größer ist als der mögliche Schwenkbereich des Zeigers (1) zur Geschwindigkeitsanzeige.

3. Kraftfahrzeug nach Anspruch 1 oder 2, **dadurch gekennzeichnet, daß** den Zeigern (1, 2) jeweils kreisbogenabschnittförmige Anzeigeskalen (4, 5) zugeordnet sind, wobei der Zeiger (2) zur Drehzahlanzeige kürzer ist als der Zeiger (1) zur Geschwindigkeitsanzeige und die Anzeigeskala-Drehzahl (5) näher an der Achse (3) der Zeiger (1, 2) liegt als die Anzeigeskala-Geschwindigkeit (4).

4. Kraftfahrzeug nach einem der Ansprüche 1 bis 3, **dadurch gekennzeichnet, daß** die Anzeigeskalen (4, 5) derart angeordnet sind, daß ein Nullpunkt der einzelnen Anzeigeskalen (4, 5) in etwa gleicher Winkellage zur Achse (3) der Zeiger (1, 2) liegt und sich die Anzeigeskala-Drehzahl (5) von dort aus über einen größeren Winkelbereich erstreckt als die Anzeigeskala-Geschwindigkeit (4).

5. Kraftfahrzeug nach Anspruch 4, **dadurch gekennzeichnet, daß** der obere Anzeigebereich der Anzeigeskala-Drehzahl (5), der außerhalb des Winkelbereichs der Anzeigeskala-Geschwindigkeit (4) liegt, zur Anzeige hoher kritischer Drehzahlen (n) des Motors dient und gesondert markiert ist.

6. Kraftfahrzeug nach zumindest einem der Ansprüche 1 bis 5, **dadurch gekennzeichnet, daß** die Zeigerantriebe zum Antrieb der Zeiger (1, 2) proportional zur Drehzahl (n) bzw. zur Geschwindigkeit (V) ausgelegt sind, wobei zumindest je ein Proportionalitätsfaktor jeweils einem festgelegten Drehzahl- bzw. Geschwindigkeitsbereich zugeordnet ist.

## Claims

1. Motor vehicle with a display device mounted in an instrument panel and with a gearbox for variable adjustment of a gear ratio between an engine output drive and vehicle drive wheels, wherein the display device includes two needles (1, 2) which are pivotable by means of associated needle drives about axes (3) located coaxially with each other and wherein one needle (1) serves for display of the current vehicle speed (V) and one needle (2) serves for display of a current engine speed (n), **characterised in that** the needle drives are designed in such a way that pivot movements of the two needles (1, 2) are effected congruently when the lowest possible gear ratio is set at the gearbox and power transmission from the engine to the drive wheels is not interrupted, and the needle (1) for display of the vehicle speed lags behind the needle (2) for display of the engine speed when higher gear ratios are set at the gearbox.

2. Motor vehicle according to claim 1, **characterised in that** the possible pivot range of the needle (2) for display of the engine speed is greater than the possible pivot range of the needle (1) for display of the vehicle speed.

3. Motor vehicle according to claim 1 or 2, **characterised in that** associated with each of the needles (1, 2) are arcuate section-shaped display scales (4, 5), wherein the needle (2) for display of the engine speed is shorter than the needle (1) for display of the vehicle speed and the engine speed display scale (5) is closer to the axis (3) of the needles (1, 2) than the vehicle speed display scale (4).

4. Motor vehicle according to any of claims 1 to 3, **characterised in that** the display scales (4, 5) are arranged in such a way that a zero point of the individual display scales (4, 5) is located in approximately the same angular position to the axis (3) of the needles (1, 2) and the engine speed display scale (5) extends from there over a greater angular range than the vehicle speed display scale (4).

5. Motor vehicle according to claim 4, **characterised in that** the upper display region of the engine speed display scale (5), which is located outside the angular range of the vehicle speed display scale (4), serves for display of high critical speeds (n) of the engine and is marked separately.

6. Motor vehicle according to one or more of claims 1 to 5, **characterised in that** the needle drives for driving the needles (1, 2) are designed proportionally to the engine speed (n) or to the vehicle speed (V), wherein at least one proportionality factor is allocated in each case to a fixed engine speed or vehicle speed range.

## Revendications

1. Véhicule automobile comportant un dispositif d'affichage intégré dans un tableau de bord et une boîte de vitesses pour le réglage variable d'un rapport de transmission entre une sortie de puissance du moteur et des roues motrices du véhicule, le dispositif d'affichage comprenant deux aiguilles (1, 2) qui par des mécanismes d'entraînement d'aiguille peuvent pivoter autour d'axes (3) mutuellement coaxiaux, une aiguille (1) servant à l'affichage de la vitesse instantanée (V) du véhicule et une aiguille (2) à l'affichage d'un régime moteur (n) instantané, **caractérisé en ce que** les mécanismes d'entraînement sont agencés de telle sorte que les mouvements de pivotement des deux aiguilles (1, 2), lorsque le rapport de transmission minimal possible est réglé et que la transmission de force entre le moteur et les roues motrices n'est pas interrompue, soient congruents, et que, pour des rapports de transmission plus élevés au niveau de la boîte de vitesses, l'aiguille (1) de vitesse suit l'aiguille (2) de régime.

2. Véhicule automobile selon la revendication 1, **caractérisé en ce que** la zone de pivotement possible de l'aiguille (2) de régime moteur est plus grande que la zone de pivotement possible de l'aiguille (1) de vitesse.

3. Véhicule automobile selon la revendication 1 ou 2, **caractérisé en ce que** des échelles d'indication (4, 5) en forme de secteurs de cercle sont associées aux aiguilles (1, 2), l'aiguille (2) de régime étant plus courte que l'aiguille (1) de vitesse et l'échelle d'indication du régime (5) étant plus proche de l'axe (3) des aiguilles (1, 2) que l'échelle d'indication de la vitesse (4).

4. Véhicule automobile selon une des revendications 1 à 3, **caractérisé en ce que** les échelles d'indication (4, 5) sont disposées de telle sorte qu'une graduation zéro des différentes échelles (4, 5) se trouve sensiblement dans la même position angulaire par rapport à l'axe (3) des aiguilles (1, 2) et qu'à partir de ce point, l'échelle d'indication du régime (5) s'étend sur une plage angulaire plus grande que l'échelle d'indication de la vitesse (4).

5. Véhicule automobile selon la revendication 4, **caractérisé en ce que** la plage d'affichage supérieure de l'échelle d'indication du régime (5) qui se trouve à l'extérieur de la plage angulaire de l'échelle d'indication de la vitesse (4) sert à indiquer des régimes (n) élevés critiques du moteur et est repérée spécialement.

6. Véhicule automobile selon au moins une des revendications 1 à 5, **caractérisé en ce que** les mécanismes d'entraînement pour l'entraînement des aiguilles (1, 2) sont agencés de manière à être proportionnels au régime (n), voire à la vitesse (v), au moins un facteur de proportionnalité étant associé chaque fois à une plage déterminée de régimes ou de vitesses.
